# EUROPÄISCHE PATENTSCHRIFT

(11) **EP 2 567 501 B1**
(45) Veröffentlichungstag und Bekanntmachung des Hinweises auf die Patenterteilung: **13.08.2014**
(21) Anmeldenummer: 11728814.2
(22) Anmeldetag: 22.06.2011
(51) Int. Cl.: H04L 9/08, H04L 9/32, G06F 21/62, H04L 29/06

(54) **VERFAHREN ZUM KRYPTOGRAPHISCHEN SCHUTZ EINER APPLIKATION**
METHOD FOR CRYPTOGRAPHIC PROTECTION OF AN APPLICATION
PROCÉDÉ POUR LA PROTECTION CRYPTOGRAPHIQUE D'UNE APPLICATION

(30) Priorität: 19.07.2010 DE 102010027586
(43) Veröffentlichungstag der Anmeldung: 13.03.2013
(73) Patentinhaber: Siemens Aktiengesellschaft, 80333 München (DE)
(72) Erfinder: MAIDL, Monika, 81675 München (DE); SELTZSAM, Stefan, 85737 Ismaning (DE)
(86) Internationale Anmeldenummer: PCT/EP2011/060487
(87) Internationale Veröffentlichungsnummer: WO 2012/010380

(56) Entgegenhaltungen:
- WO-A1-2005/119606
- US-A1- 2003 177 401
- US-A1- 2005 138 374
- US-A1- 2010 058 068

## Beschreibung

Die Erfindung betrifft ein Verfahren und ein System zum kryptographischen Schutz einer Applikation.

Aus dem Stand der Technik ist es bekannt, dass im Rahmen eines so genannten Cloud-Computing durch einen Dienstbetreiber Rechenleistung Dritten zur Verfügung gestellt wird, welche diese Rechenleistung zur Ausführung von Applikationen nutzen. Die Applikationen laufen dabei auf einem Rechenzentrum des Dienstbetreibers, das sich entweder konzentriert an einem Ort befinden kann oder auch zur Erbringung von flexiblen Diensten verteilt zusammengeschaltet sein kann.

Ein Kunde des Dienstbetreibers in der Form eines Applikationseigners, der eine zu ihm gehörige Applikation auf dem Rechenzentrum des Dienstbetreibers laufen lassen möchte, ist daran interessiert, dass der Dienstbetreiber keine Möglichkeit hat, auf die Applikation bzw. durch die Applikation erzeugte Applikationsdaten zugreifen kann. Es müssen somit Schutzmaßnahmen getroffen werden, mit denen System-Administratoren auf Seiten des Dienstbetreibers von der Applikation abgeschirmt werden. Eine Maßnahme dieser Abschirmung ist z. B. die Verschlüsselung von kritischen Daten, welche die Applikation auf entsprechenden Speichermitteln, insbesondere auf Festplatten, des Rechenzentrums des Dienstbetreibers speichert. Dadurch kann ein unbemerkter Zugriff durch System-Administratoren des Rechenzentrums auf Daten der Applikation verhindert werden. Ein Problem ist dabei die sichere Verwahrung der zur Verschlüsselung verwendeten kryptographischen Schlüssel.

Aus dem Stand der Technik sind so genannte Sicherheitsmodule, insbesondere in der Form von Hardware-Sicherheitsmodulen, bekannt. Diese ermöglichen in einer sicheren Umgebung, insbesondere in der Form einer Chipkarte oder eines Security-Tokens, die Speicherung von geheimen Schlüsseln, wobei nur über eine Authentisierung ein Zugriff auf die gespeicherten Schlüssel ermöglicht wird. Üblicherweise wird zur Authentisierung eine so genannte PIN verwendet, welche von dem Besitzer des Sicherheitsmoduls zum Zugriff auf die darauf gespeicherten Daten eingegeben werden muss. Wird im Rahmen einer Auslagerung einer Applikation auf ein Rechenzentrum eines externen Dienstbetreibers ein Sicherheitsmodul zur Speicherung von kryptographischen Schlüsseln zur Verschlüsselung von Applikationsdaten verwendet, so erweist es sich als nachteilhaft, dass bei einer herkömmlichen Authentisierung über eine PIN bei jedem Zugriff auf das Sicherheitsmodul diese PIN manuell eingegeben werden muss.

Die Druckschrift US 2003/177401 A1 beschreibt ein Verfahren, bei dem eine Applikation sich gegenüber einem Sicherheitsmodul mit einem Passwort authentifiziert. In einer ersten Phase sendet die Applikation die Anforderung für einen Applikationsschlüssel mit einem Passwort an das Sicherheitsmodul, welches daraufhin einen Applikationsschlüssel erzeugt, der an das Passwort gebunden ist. In der zweiten Phase sendet die Applikation das Passwort und den gebundenen Applikationsschlüssel an das Applikationsmodul, um den Schlüssel zum Veroder Entschlüsseln zu nutzen. Nur wenn Passwort und gebundener Schlüssel zusammenpassen, kann der Applikationsschlüssel verwendet werden. Das Passwort wird dabei von einem Nutzer/Administrator bereitgestellt.

Die US 2010/058068 A1 beschreibt ein vernetztes System zum internetbasierten Zugriff auf Bankkonten, das es einem Nutzer ermöglicht, seine PIN gezeigt zu bekommen und die PIN zu ändern. Dabei stellt eine Applikation dem Nutzer ein Web-Interface zur Verfügung und hat andererseits eine Schnittstelle zu einem Sicherheitsmodul. Das Sicherheitsmodul gehört dabei nicht dem Nutzer.

Aufgabe der Erfindung ist es deshalb, eine Applikation eines Applikationseigners in einem Rechenzentrum eines externen

Dienstbetreibers gegenüber unbefugten Zugriffen des Dienstbetreibers über ein Sicherheitsmodul zu schützen, wobei ein automatischer gesicherter Zugriff der Applikation auf Daten des Sicherheitsmoduls ermöglicht wird.

Diese Aufgabe wird durch das Verfahren gemäß Patentanspruch 1 bzw. das System gemäß Patentanspruch 14 gelöst. Weiterbildungen der Erfindung sind in den abhängigen Ansprüchen definiert.

Das erfindungsgemäße Verfahren dient zum kryptographischen Schutz einer Applikation, welche einem Applikationseigner zugeordnet ist und in einem Rechenzentrum ausgeführt wird, das von einem externen, nicht zum Applikationseigner gehörenden Dienstbetreiber verwaltet wird. Unter Applikationseigner ist dabei eine Instanz bzw. Institution, wie z. B. ein Unternehmen, zu verstehen. Dieser Instanz bzw. Institution gehört die Applikation, insbesondere wurde die Applikation auch von dieser Instanz bzw. Institution entwickelt. Der Begriff des Rechenzentrums ist im Sinne der Erfindung weit zu verstehen und kann eine oder mehrere Rechner an einem festen Ort bzw. verteilt an verschiedenen Orten umfassen, wobei über diese Rechner Rechenleistung zur Ausführung von Rechenvorgängen bereitgestellt wird. Die Verwaltung des Rechenzentrums wird wiederum durch eine Instanz bzw. Institution (insbesondere ein Unternehmen) vorgenommen, welches den Dienstbetreiber darstellt. Da der Dienstbetreiber das Rechenzentrum betreibt, hat er auch Administrator-Zugriffsrechte auf das Rechenzentrum.

Im Rahmen des erfindungsgemäßen Verfahrens wird ein Sicherheitsmodul verwendet, das zwar dem Applikationseigner gehört, welches jedoch im Rechenzentrum vorgesehen ist, d.h. welches über eine entsprechende (lokale) Schnittstelle (z. B. USB) an einem Rechner des Rechenzentrums angeschlossen ist. Auf diesem Sicherheitsmodul ist privates (permanentes) kryptographisches Material (z.B. private Schlüssel) des Applikationseigners hinterlegt, welches dazu dient, um Applikationsdaten der Applikation geeignet zu verschlüsseln. Das Sicherheitsmodul ist dabei insbesondere als ein so genanntes Hardware-Sicherheitsmodul realisiert, welches hinlänglich aus dem Stand der Technik bekannt ist.

Erfindungsgemäß wird durch ein Generierungsmittel des Applikationseigners oder durch das Sicherheitsmodul ein kryptographisches Geheimnis generiert. Der Begriff des Generierungsmittels ist dabei weit zu verstehen und kann jede, basierend auf Software bzw. Hardware realisierte Einheit in einer sicheren Rechenumgebung des Applikationseigners umfassen. Das kryptographische Geheimnis wird zunächst über einen ersten sicheren Kanal, der die Kommunikation zwischen der Applikation und einem Rechnermittel des Applikationseigners schützt, zwischen dem Rechnermittel und dem Sicherheitsmodul übermittelt, wodurch das kryptographische Geheimnis für das Rechnermittel und das Sicherheitsmodul zugänglich wird. Ein solcher erster sicherer Kanal kann beispielsweise über eine entsprechende Verschlüsselung mit einem öffentlichen Schlüssel des Sicherheitsmoduls erreicht werden, wie weiter unten noch näher beschrieben wird. Analog zu dem Generierungsmittel ist das oben erwähnte Rechnermittel eine beliebige Einheit in der Form von Hardware bzw. Software in einer sicheren Rechnerumgebung des Applikationseigners. Diese Einheit kann übereine entsprechende Schnittstelle mit der Applikation kommunizieren.

Das kryptographische Geheimnis wird im Rahmen des erfindungsgemäßen Verfahrens ferner über einen zweiten sicheren Kanal, der die Kommunikation zwischen der Applikation und dem Rechnermittel des Applikationseigners schützt, von dem Rechnermittel an die Applikation übermittelt, wodurch das kryptographische Geheimnis für die Applikation zugänglich wird. Es wird dabei vorausgesetzt, dass ein zweiter sicherer Kanal zwischen Applikationseigner und Applikation aufgebaut werden kann. Ein solcher zweiter sicherer Kanal ist problemlos realisierbar, da die Applikation dem Applikationseigner gehört, so dass in geeigneter Weise z.B. ein gemeinsamer privater Schlüssel von Applikation und Applikationseigner zum Aufbau des zweiten sicheren Kanals generiert werden kann.

Erfindungsgemäß erfolgt schließlich eine Authentisierung der Applikation gegenüber dem Sicherheitsmodul basierend auf dem für die Applikation und das Sicherheitsmodul zugänglichen kryptographischen Geheimnis, wobei im Falle einer erfolgreichen Authentisierung das kryptographische Material des Applikationseigners über einen durch das kryptographische Geheimnis geschützten Kanal von dem Sicherheitsmodul an die Applikation übertragbar ist.

Das erfindungsgemäße Verfahren zeichnet sich dadurch aus, dass automatisiert ein Zugriff einer auf einem Rechenzentrum laufenden Applikation auf kryptographisches Material des Applikationseigners ermöglicht wird, ohne dass der Dienstbetreiber des Rechenzentrums die Möglichkeit hat, das kryptographische Material auszulesen. Dies wird durch die Verwendung eines Sicherheitsmoduls des Applikationseigners erreicht, wobei über sichere Kanäle unter Zwischenschaltung des Applikationseigners ein kryptographisches Geheimnis übermittelt wird, so dass dieses Geheimnis sowohl der Applikation als auch dem Sicherheitsmodul bereitgestellt wird. Dieses Geheimnis kann dann zur Übertragung von kryptographischem Material des Sicherheitsmoduls an die Applikation genutzt werden.

In einer besonders bevorzugten Ausführungsform des erfindungsgemäßen Verfahrens erfolgt die Authentisierung der Applikation gegenüber dem Sicherheitsmodul derart, dass mit dem für die Applikation zugänglichen kryptographischen Geheimnis eine Information von der Applikation verschlüsselt und an das Sicherheitsmodul übertragen wird, wobei eine Bedingung für eine erfolgreiche Authentisierung darin besteht, dass das Sicherheitsmodul die Information mit dem für das Sicherheitsmodul zugänglichen kryptographischen Geheimnis entschlüsseln kann. Hierdurch wird auf besonders einfache Weise eine Verifikation dahingehend durchgeführt, dass sowohl die Applikation als auch das Sicherheitsmodul das gleiche kryptographische Geheimnis beinhalten.

In einer weiteren bevorzugten Ausführungsform des erfindungsgemäßen Verfahrens wird insbesondere zu Beginn des Verfahrens eine Sitzungsidentität generiert, welche bei der Übermittlung des kryptographischen Geheimnisses über den ersten sicheren Kanal und/oder über den zweiten sicheren Kanal und/oder im Rahmen der Authentisierung der Applikation gegenüber dem Sicherheitsmodul mit übertragen wird. Dabei wird im Laufe des Verfahrens verifiziert, ob die Sitzungsidentität unverändert bleibt. Dies kann beispielsweise dadurch erfolgen, dass diejenige Einheit, welche die Sitzungsidentität zu Beginn des Verfahrens erzeugt hat (z. B. die Applikation oder das Sicherheitsmodul), überprüft, ob die zu einem späteren Zeitpunkt an sie übermittelte Sitzungsidentität mit der ursprünglich generierten Sitzungsidentität übereinstimmt. Ist dies nicht der Fall, wird das Verfahren vorzugsweise abgebrochen. Gemäß dieser Variante der Erfindung wird ein Schutz von so genannten Replay-Angriffen erreicht, bei denen versucht wird, in früheren Sitzungen verwendete Geheimnisse in das Verfahren einzuschleusen. In einer bevorzugten Variante wird die Sitzungsidentität ferner als diejenige Information verwendet, welche von der Applikation bei deren Authentisierung verschlüsselt und an das Sicherheitsmodul übertragen wird.

In einer weiteren Ausführungsform des erfindungsgemäßen Verfahrens wird das kryptographische Geheimnisse von dem Sicherheitsmodul generiert und über den ersten sicheren Kanal an das Rechnermittel des Applikationseigners übertragen, wobei der erste sichere Kanal dadurch gebildet wird, dass eine erste Nachricht mit einer ersten Verschlüsselung verschlüsselt wird, auf welche der Dienstbetreiber keinen Zugriff hat, und anschließend an das Rechenmittel des Applikationseigners übertragen wird, wobei die erste Nachricht das kryptographische Geheimnis enthält. Vorzugsweise ist dabei die verschlüsselte erste Nachricht mit einer Signatur des Sicherheitsmoduls signiert, so dass verifiziert werden kann, dass die erste Nachricht auch von dem Sicherheitsmodul stammt. In einer bevorzugten Variante erfolgt die erste Verschlüsselung mit einem öffentlichen Schlüssel des Applikationseigners oder gegebenenfalls auch mit einem privaten Schlüssel, der nur dem Applikationseigner oder dem Sicherheitsmodul bekannt ist.

In einer weiteren Variante des erfindungsgemäßen Verfahrens wird die an das Rechnermittel des Applikationseigners übertragene verschlüsselte erste Nachricht entschlüsselt, wobei die Entschlüsselung vorzugsweise durch das Rechnermittel erfolgt. Anschließend wird die erste Nachricht über den zweiten sicheren Kanal an die Applikation übertragen, wobei der zweite sichere Kanal dadurch gebildet wird, dass die entschlüsselte erste Nachricht mit einer zweiten Verschlüsselung, auf welche der Dienstbetreiber keinen Zugriff hat, verschlüsselt wird und an die Applikation gesendet wird. Auf diese Weise wird das kryptographische Geheimnis über eine geschützte Verbindung an die Applikation übermittelt, wobei die Applikation über einen entsprechenden Schlüssel zum Entschlüsseln der zweiten Verschlüsselung verfügt.

In einer weiteren Ausgestaltung des erfindungsgemäßen Verfahrens wird das kryptographische Geheimnis von dem Generierungsmittel des Applikationseigners generiert und über den ersten sicheren Kanal an das Sicherheitsmodul übertragen, wobei der erste sichere Kanal dadurch gebildet wird, dass eine zweite Nachricht über eine zweite Verschlüsselung verschlüsselt wird, auf welche der Dienstbetreiber keinen Zugriff hat, und anschließend an das Sicherheitsmodul übertragen wird, wobei die zweite Nachricht das kryptographische Geheimnis enthält. Vorzugsweise ist dabei die verschlüsselte zweite Nachricht mit einer Signatur des Applikationseigners signiert. Ferner erfolgt die zweite Verschlüsselung der zweiten Nachricht vorzugsweise mit einem öffentlichen Schlüssel des Sicherheitsmoduls oder gegebenenfalls auch mit einem privaten Schlüssel, der nur dem Applikationseigner und dem Sicherheitsmodul bekannt ist.

In einer weiteren, besonders bevorzugten Ausführungsform des erfindungsgemäßen Verfahrens wird der erste sichere Kanal über die Applikation getunnelt. Das heißt, im Rahmen des ersten sicheren Kanals erfolgt eine Nachrichtenübermittlung unter Zwischenschaltung der Applikation, wobei die Applikation jedoch nicht die Möglichkeit hat, auf diesen ersten sicheren Kanal bzw. die darin übermittelten Informationen zuzugreifen. In einer besonders bevorzugten Variante wird der getunnelte erste sichere Kanal dadurch gebildet, dass die verschlüsselte zweite Nachricht zusammen mit zumindest dem kryptographischen Geheimnis zunächst über den zweiten sicheren Kanal an die Applikation übertragen wird, wobei die Applikation anschließend die empfangene verschlüsselte zweite Nachricht an das Sicherheitsmodul überträgt. Auf diese Weise wird eine parallele Übertragung sowohl über den ersten als auch über den zweiten sicheren Kanal erreicht.

Neben dem oben beschriebenen Verfahren betrifft die Erfindung ferner ein System zum kryptographischen Schutz einer Applikation, wobei die Applikation einem Applikationseigner zugeordnet ist und in einem Rechenzentrum ausführbar ist, das von einem externen, nicht zum Applikationseigner gehörenden Dienstbetreiber verwaltet wird, wobei das System ein im Rechenzentrum vorgesehenes Sicherheitsmodul des Applikationseigners umfasst, auf dem privates kryptographisches Material des Applikationseigners hinterlegt ist, sowie ein Generierungsmittel und ein Rechnermittel des Applikationseigners. Das System ist dabei derart ausgestaltet, dass es bei der Durchführung der Applikation in dem Rechenzentrum das oben beschriebene erfindungsgemäße Verfahren bzw. eine oder mehrere Varianten dieses Verfahrens ausführt.

Ausführungsbeispiele der Erfindung werden nachfolgend anhand der beigefügten Figuren detailliert beschrieben.

Es zeigen:
- Fig. 1: eine schematische Darstellung des Nachrichtenaustausches gemäß einer ersten Ausführungsform des erfindungsgemäßen Verfahrens; und
- Fig. 2: eine schematische Darstellung des Nachrichtenaustausches gemäß einer zweiten Ausführungsform des erfindungsgemäßen Verfahrens.

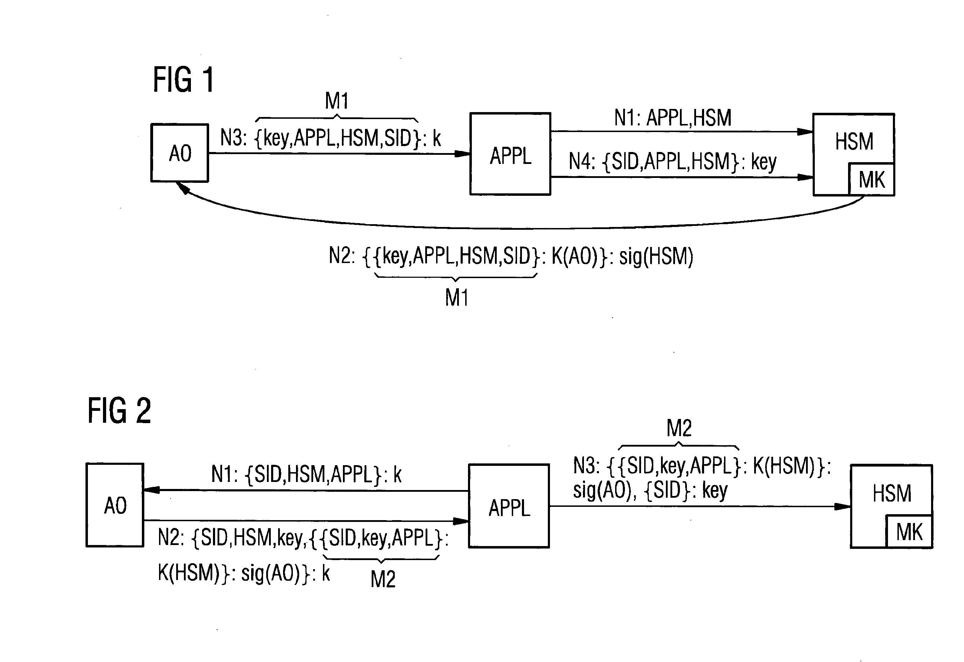

Die nachfolgend beschriebenen Ausführungsformen des erfindungsgemäßen Verfahrens betreffen den kryptographischen Schutz einer Applikation APPL, welche zu einem Applikationseigner gehört, der in Fig. 1 und Fig. 2 durch das Bezugszeichen AO angedeutet ist. Der Applikationseigner stellt dabei eine Instanz bzw. Institution, wie z. B. ein Unternehmen, dar, zu dem die Applikation APPL gehört. Beispielsweise kann die Applikation APPL von dem Applikationseigner entwickelt worden sein. Über die Applikation stellt der Applikationseigner seinen Kunden einen entsprechenden Dienst bereit, wobei er die Applikation zur Bereitstellung des Dienstes nicht selbst ausführt, sondern sich hierzu eines Rechenzentrums bedient, auf dem die Applikation läuft. Das Rechenzentrum ist somit eine externe Einheit, welche von einem nicht zum Applikationseigner AO gehörenden Dienstbetreiber verwaltet wird. Es besteht deshalb die Notwendigkeit, die Applikation APPL bzw. entsprechende Applikationsdaten in geeigneter Weise vor einem unbefugten Zugriff des Dienstbetreibers zu schützen. Hierzu wird ein privater Schlüssel in der Form eines Master-Keys MK verwendet, mit dem durch die Applikation erzeugte Daten in dem entsprechenden Speicher im Rechenzentrum (z. B. auf einer Festplatte im Rechenzentrum) geeignet verschlüsselt werden. Dabei ist sicherzustellen, dass zwar die Applikation Zugriff auf den Master-Key MK hat, dieser jedoch vor dem Zugriff des Dienstbetreibers kryptographisch geschützt wird.

Zur Bereitstellung des Master-Keys MK wird in der nachfolgend beschriebenen Ausführungsform ein so genanntes Hardware-Sicherheitsmodul HSM verwendet, welches an sich aus dem Stand der Technik bekannt ist, wobei dieses Sicherheitsmodul dem Applikationseigner gehört und eine kryptographisch gesicherte Umgebung darstellt, in welcher der Master-Key MK hinterlegt ist. Das Hardware-Sicherheitsmodul HSM ist in dem Rechenzentrum vorgesehen, d.h. es ist mit einem entsprechenden Rechner im Rechenzentrum in geeigneter Weise über eine drahtlose oder drahtgebundene Schnittstelle verbunden, wobei der kryptographische Schutz des Hardware-Sicherheitsmoduls sicherstellt, dass der Dienstbetreiber, der das Rechenzentrum verwaltet, keine Zugriffsmöglichkeit auf die darauf gespeicherten Daten hat.

Ziel des erfindungsgemäßen Verfahrens ist es nunmehr, einen automatisierten Zugriff auf den Master-Key NK unter der Kontrolle des Applikationseigners AO zu schaffen, so dass die Applikation APPL den Master-Key zur Verschlüsselung von Daten empfängt, ohne dass der Dienstbetreiber des Rechenzentrums eine Zugriffsmöglichkeit auf den Master-Key hat. Um dies zu erreichen, wird eine gesicherte Authentisierung der Applikation APPL gegenüber dem Hardware-Sicherheitsmodul HSM durchgeführt, wobei die Authentisierung auch gegenüber Angreifern geschützt ist, welche Administratorrechte im Rechenzentrum haben. Eine Randbedingung ist dabei, dass die Authentisierung der Applikation an dem Hardware-Sicherheitsmodul automatisch, d.h. ohne Eingriff von Personen, erfolgen soll. Durch diese Randbedingung wird sichergestellt, dass die Applikation nach einem Systemabsturz automatisch sofort wieder starten kann.

Im Folgenden wird unter dem Applikationseigner AO eine entsprechend gesicherte Rechnerumgebung verstanden, die dem Applikationseigner zugeordnet ist. Das heißt, wenn nachfolgende Schritte durch den Applikationseigner durchgeführt werden oder mit dem Applikationseigner kommuniziert wird, bedeutet dies, dass ein entsprechendes Rechnermittel, realisiert durch Software bzw. Hardware, welches Teil der sicheren Rechnerumgebung ist, an dem Verfahrensschritt bzw. der Kommunikation beteiligt ist. Nachfolgend wird ferner vorausgesetzt, dass es im laufenden Betrieb der Applikation einen sicheren Kanal zwischen dem Applikationseigner AO und der Applikation APPL gibt, über den der Applikationseigner AO mit der Applikation APPL Nachrichten austauschen kann, so dass kein Dritter, auch nicht ein System-Administrator des Rechenzentrums, diese Nachrichten lesen kann. Ein solcher sicherer Kanal, der dem zweiten sicheren Kanal im Sinne der Patentansprüche entspricht, ist problemlos zwischen Applikationseigner AO und Applikation APPL realisierbar, da die Applikation dem Applikationseigner gehört und diesem somit bekannt ist. Folglich kann in geeigneter Weise beim Ablauf der Applikation im Rechenzentrum ein entsprechendes, nur dem Applikationseigner und der Applikation bekanntes Geheimnis generiert werden, dass dann zum Aufbau des sicheren Kanals zwischen Applikationseigner und Applikation verwendet wird.

Im Folgenden werden anhand von Fig. 1 und Fig. 2 zwei Varianten des erfindungsgemäßen Verfahrens beschrieben, wobei im Rahmen der Verfahren entsprechende Nachrichten N1, N2, N3 und N4 ausgetauscht werden. Dabei bezeichnet die Notation {N}:k eine Verschlüsselung bzw. Signatur einer in den Klammern stehenden Nachricht N mit einem entsprechenden Schlüssel k bzw. einer entsprechenden Signatur k. Ferner werden folgende Bezeichnungen im Rahmen von Fig. 1 und Fig. 2 verwendet:
- sig(HSM): Signatur des Hardware-Sicherheitsmoduls HSM, mit einem entsprechenden privaten Schlüssel von HSM;
- sig(AO): Signatur des Applikationseigners AO, mit einem entsprechenden privaten Schlüssel von AO;
- K(AO): Öffentlicher Schlüssel des Applikationseigners AO;
- K(HSM) Öffentlicher Schlüssel des Hardware-Sicherheitsmoduls HSM;
- k: Schlüssel zur Verschlüsselung der Kommunikation zwischen Applikationseigner AO und Applikation APPL;
- key: gemeinsames Geheimnis zwischen Applikation APPL und Hardware-Sicherheitsmodul HSM, welches im Rahmen der nachfolgend beschriebenen erfindungsgemäßen Varianten generiert und ausgetauscht wird;
- SID: Session-Identifikation, welche zu Beginn des Verfahrens generiert wird.

Sofern die Bezugszeichen APPL und HSM innerhalb der ausgetauschten Nachrichten verwendet werden, so bezeichnen diese eindeutige Identifikatoren der Applikation bzw. des Hardware-Sicherheitsmoduls, z. B. einen Hash-Code der Applikation bzw. eine Seriennummer des Hardware-Sicherheitsmoduls.

Im Rahmen der Ausführungsform der Fig. 1 wird ein Nachrichtenaustausch von der Applikation APPL über eine Nachricht N1, initialisiert, welche von der Applikation APPL an das Hardware-Sicherheitsmodul HSM geschickt wird und den Identifikator der Applikation APPL und des Hardware-Sicherheitsmoduls HSM enthält. Anschließend generiert das Hardware-Sicherheitsmodul einen symmetrischen Schlüssel "key", der am Ende des Verfahrens das gemeinsame Geheimnis zwischen Applikation und Hardware-Sicherheitsmodul darstellt. Dieser symmetrische Schlüssel wird über einen ersten sicheren Kanal basierend auf der Nachricht N2 von dem Hardware-Sicherheitsmodul HSM an den Applikationseigner AO gesendet. In der Nachricht N2 ist eine Nachricht M1 enthalten, welche den Schlüssel key, die Identifikatoren der Applikation APPL und des Sicherheitsmoduls HSM sowie eine Session-Identifikation SID enthält. Diese Session-Identifikation wurde von dem HSM erzeugt. Die Nachricht M1 ist dabei mit dem öffentlichen Schlüssel K(AO) des Applikationseigners verschlüsselt und ferner mit der Signatur sig(HSM) des Hardware-Sicherheitsmoduls signiert. Basierend auf dieser Nachricht M2 wird sichergestellt, dass der generierte Schlüssel key nicht von den System-Administratoren des Rechenzentrums gelesen werden kann, denn diese haben keinen Zugriff auf den privaten Schlüssel des Applikationseigners zum Entschlüsseln der Nachricht M1. Dadurch, dass die Nachricht M2 mit sig(HSM) signiert ist, kann sich der Applikationseigner AO sicher sein, dass die Nachricht und damit auch der Schlüssel key von dem Sicherheitsmodul HSM stammen.

Nach Empfang der Nachricht N2 sendet der Applikationseigner AO eine Nachricht N3 über den zwischen Applikationseigner AO und Applikation APPL etablierten sicheren Kanal an die Applikation. Die Nachricht N3 enthält dabei die zuvor im Rahmen der Nachricht N2 übermittelte Nachricht M1, welche nunmehr über den entsprechenden Schlüssel k, der die Kommunikation zwischen AO und APPL schützt, verschlüsselt ist. Durch den sicheren Kanal zwischen dem Applikationseigner AO und der Applikation APPL wird sichergestellt, dass nur die Applikation APPL den Schlüssel key aus der Nachricht N3 auslesen kann.

In einem nächsten Schritt erfolgt schließlich die Authentisierung der Applikation APPL gegenüber dem Sicherheitsmodul HSM, wobei die Authentisierung basierend auf der Nachricht N4 erfolgt, welche die Identifikatoren der Applikation APPL und des Sicherheitsmoduls HSM sowie die Session-Identifikation SID enthält und mit dem ursprünglich im HSM generierten Schlüssel key verschlüsselt ist. Die Authentisierung ist dabei nur dann erfolgreich, wenn HSM die Nachricht mit dem ursprünglich von ihm generierten Schlüssel entschlüsseln kann. Ein weiteres Sicherheitsmerkmal wird dadurch erreicht, dass ferner die übermittelte Session-Identifikation SID mit der ursprünglich vom HSM generierten Session-Identifikation übereinstimmen muss. Auf diese Weise wird ein Schutz vor sogenannten Replay-Angriffen gewährleistet, bei denen schon einmal im Rahmen einer früheren Authentisierung übermittelte Nachrichten nochmals verwendet werden.

Sollte das Entschlüsseln der Nachricht N4 mit dem Schlüssel key des HSM möglich sein und ferner die Session-Identifikation SID mit der ursprünglichen Session-Identifikation übereinstimmen, ist die Authentisierung erfolgreich. Nun kann sich das Hardware-Sicherheitsmodul HSM sicher sein, dass Nachrichten, die von der Applikation APPL bei ihm empfangen werden und mit dem Schlüssel key verschlüsselt sind, wirklich von der Applikation stammen. Gemäß der Variante der Fig. 1 wird dabei erreicht, dass das Geheimnis key über vertrauenswürdige Verbindungen unter Zwischenschaltung des Applikationseigners AO an die Applikation APPL gelangt, ohne dass ein System-Administrator des Rechenzentrums die Möglichkeit hat, auf das Geheimnis zuzugreifen.

Nach erfolgreicher Authentisierung kann mit Hilfe des Schlüssels key ein sicherer Kanal zwischen der Applikation APPL und dem Sicherheitsmodul HSM aufgebaut werden. Über diesen Kanal wird dann der Master-Key MK an die Applikation APPL übermittelt werden, welche anschließend Applikationsdaten mit diesem Schlüssel verschlüsseln kann.

Fig. 2 zeigt eine zweite Variante des erfindungsgemäßen Verfahrens. In dieser Variante wird im Unterschied zur Ausführungsform der Fig. 1 das gemeinsame Geheimnis in der Form des Schlüssels key nicht vom Hardware-Sicherheitsmodul HSM, sondern von dem Applikationseigner AO generiert. In einem ersten Schritt wird zunächst von der Applikation APPL, die sich gegenüber dem Hardware-Sicherheitsmodul HSM authentisieren will, eine gesicherte Nachricht N1 an den Applikationseigner AO gesendet. Diese, über den Schlüssel k verschlüsselte Nachricht enthält eine Session-Identifikation SID, welche nunmehr von der Applikation APPL generiert wird, sowie Identifikatoren des Hardware-Sicherheitsmoduls HSM und der Applikation APPL.

Nach Empfang der Nachricht N1 erzeugt der Applikationseigner AO den symmetrischen Schlüssel key. Dieser Schlüssel stellt das gemeinsame Geheimnis dar, das am Ende des Verfahrens die Applikation APPL gegenüber dem Sicherheitsmodul HSM authentisiert. Um diese Authentisierung zu erreichen, muss der Schlüssel key sicher an die Applikation APPL und das Sicherheitsmodul HSM übertragen werden. Dies wird im Rahmen der Fig. 2 durch die Übermittlung der Nachricht N2 vom Applikationseigner AO an die Applikation APPL sowie der Nachricht N3 von der Applikation APPL an das Sicherheitsmodul HSM erreicht. Im Unterschied zu Fig. 1 wird dabei kein separater sicherer Kanal zwischen Applikationseigner AO und Sicherheitsmodul HSM aufgebaut. Vielmehr wird ein sicherer Kanal zwischen Applikationseigner AO und Sicherheitsmodul HSM über die Applikation APPL getunnelt.

Im Rahmen der soeben erwähnten Nachricht N2 wird eine Nachricht M2 zusammen mit dem generierten Schlüssel key, der Session-Identifikation SID und dem Identifikator des Hardware-Sicherheitsmoduls HSM übermittelt. Die Nachricht M2 enthält dabei nochmals die Session-Identifikation SID und den Schlüssel key sowie den Identifikator der Applikation APPL. Die Nachricht ist dabei mit dem öffentlichen Schlüssel K(HSM) des Sicherheitsmoduls verschlüsselt und ferner mit der Signatur sig(AO) des Applikationseigners signiert. Die Kombination aus verschlüsselter und signierter Nachricht M2 mit SID, HSM und key wird über den sicheren Kanal zwischen AO und APPL an die Applikation APPL übermittelt. Anschließend entschlüsselt APPL die Nachricht und erhält damit den Schlüssel key, der im Arbeitsspeicher gehalten wird. Durch die in der Nachricht enthaltene Session-Identifikation SID kann die Applikation verifizieren, dass die Nachricht aktuell ist, denn sie kann die übermittelte Session-Identifikation mit der ursprünglich von ihr generierten Session-Identifikation vergleichen. Anschließend sendet die Applikation APPL eine Nachricht N3 an das Sicherheitsmodul HSM, wobei diese Nachricht die in der zuvor empfangenen Nachricht N2 enthaltene Nachricht M2 umfasst, die mit sig(AO) signiert ist und mit dem öffentlichen Schlüssel des Sicherheitsmoduls HSM verschlüsselt ist, so dass sie nicht von der Applikation entschlüsselt werden konnte. Darüber hinaus verschlüsselt die Applikation APPL die Session-Identifikation mit dem Schlüssel key und fügt das Ergebnis an die Nachricht N3 an.

Nach Empfang der Nachricht N3 kann das Sicherheitsmodul HSM über die Signatur sig(AO) verifizieren, dass der Applikationseigner AO diese Nachricht erzeugt hat und den Schlüssel key auch sicher an die Applikation APPL übermittelt hat. Anschließend kann das HSM die verschlüsselte Session-Identifikation über den bei ihm hinterlegten Schlüssel key entschlüsseln, was beweist, dass APPL im Besitz des gemeinsamen Geheimnisses key ist. Aufgrund der erfolgreichen Entschlüsselung ist dann die Applikation APPL gegenüber dem Sicherheitsmodul HSM authentisiert, d.h. das Sicherheitsmodul HSM kann sicher sein, dass die mit dem Schlüssel key verschlüsselten Nachrichten von APPL kommt. Über den Vergleich der Session-Identifikation SID in der Nachricht N3 mit der über key verschlüsselten Session-Identifikation kann das Sicherheitsmodul HSM ferner ermitteln, dass die Nachricht N3 kein Replay einer alten Nachricht ist. Nach der Authentisierung kann dann zwischen der Applikation APPL und dem Sicherheitsmodul HSM ein sicherer Kanal unter Verwendung des gemeinsamen Geheimnisses in der Form des Schlüssels key aufgebaut werden, woraufhin dann der Master-Key MK von dem HSM an die Applikation APPL übertragen werden kann, so dass die Applikation anschließend der Applikationsdaten mit diesem Master-Key verschlüsseln kann.

Die im Vorangegangenen beschriebene Erfindung weist eine Reihe von Vorteilen auf. Insbesondere wird eine sichere Authentisierung der Applikation APPL beim Sicherheitsmodul HSM des Applikationseigners AO ermöglicht, ohne dass der externe Dienstbetreiber, auf dessen Rechenzentrum die Applikation läuft, die Möglichkeit hat, auf das im Rahmen der Authentisierung erzeugte gemeinsame Geheimnis zwischen Applikation und Sicherheitsmodul zuzugreifen. Dies wird durch die Verwendung eines dem Applikationseigner zugeordneten Sicherheitsmoduls sowie eine Kommunikation über sichere Kanäle unter Zwischenschaltung des Applikationseigners erreicht. Dabei kann der Zugriff auf den Master-Key des Sicherheitsmoduls automatisch erfolgen, ohne dass manuell ein Passwort von berechtigten Personen des Applikationseigners eingegeben werden muss.

## Patentansprüche

1. Verfahren zum kryptographischen Schutz einer Applikation (APPL), wobei die Applikation (APPL) einem Applikationseigner (AO) zugeordnet ist und in einem Rechenzentrum ausgeführt wird, das von einem externen, nicht zum Applikationseigner (AO) gehörenden Dienstbetreiber verwaltet wird, wobei im Rechenzentrum ein Sicherheitsmodul (HSM) des Applikationseigners (AO) vorgesehen ist, auf dem privates kryptographisches Material (MK) des Applikationseigners (AO) hinterlegt ist, wobei:
- durch ein Generierungsmittel des Applikationseigners (AO) oder durch das Sicherheitsmodul (HSM) ein kryptographisches Geheimnis (key) generiert wird;
- das kryptographische Geheimnis (key) über einen ersten sicheren Kanal, der die Kommunikation zwischen der Applikation (APPL) und einem Rechnermittel des Applikationseigners (AO) schützt, zwischen dem Rechnermittel und dem Sicherheitsmodul (HSM) übermittelt wird, wodurch das kryptographische Geheimnis (key) für das Rechnermittel und das Sicherheitsmodul (HSM) zugänglich wird;
- das kryptographische Geheimnis (key) über einen zweiten sicheren Kanal, der die Kommunikation zwischen der Applikation (APPL) und dem Rechnermittel des Applikationseigners (AO) schützt, von dem Rechnermittel an die Applikation (APPL) übermittelt wird, wodurch das kryptographische Geheimnis (key) für die Applikation (APPL) zugänglich wird;
- eine Authentisierung der Applikation (APPL) gegenüber dem Sicherheitsmodul (HSM) basierend auf dem für die Applikation (APPL) und das Sicherheitsmodul (HSM) zugänglichen kryptographischen Geheimnis (key) durchgeführt wird, wobei nach erfolgreicher Authentisierung das kryptographische Material (MK) des Applikationseigners (AO) über einen durch das kryptographische Geheimnis (key) geschützten Kanal von dem Sicherheitsmodul (HSM) an die Applikation (APPL) übertragbar ist.

2. Verfahren nach Anspruch 1, bei dem die Authentisierung der Applikation (APPL) derart erfolgt, dass mit dem für die Applikation (APPL) zugänglichen kryptographischen Geheimnis (key) eine Information von der Applikation (APPL) verschlüsselt und an das Sicherheitsmodul (HSM) übertragen wird, wobei eine Bedingung für eine erfolgreiche Authentisierung darin besteht, dass das Sicherheitsmodul (HSM) die Information mit dem für das Sicherheitsmodul (HSM) zugänglichen kryptographischen Geheimnis (key) entschlüsseln kann.

3. Verfahren nach Anspruch 1 oder 2, bei dem eine Sitzungsidentität (SID) generiert wird, welche bei der Übermittlung des kryptographischen Geheimnisses (key) über den ersten sicheren Kanal und/oder über den zweiten sicheren Kanal und/oder im Rahmen der Authentisierung der Applikation (APPL) mit übertragen wird, wobei im Laufe des Verfahrens verifiziert wird, ob die Sitzungsidentität (SID) unverändert bleibt.

4. Verfahren nach Anspruch 2 und 3, bei dem die Sitzungsidentität (SID) die Information ist, welche von der Applikation (APPL) bei deren Authentisierung verschlüsselt und an das Sicherheitsmodul (HSM) übertragen wird.

5. Verfahren nach einem der vorhergehenden Ansprüche, bei dem das kryptographische Geheimnis (key) von dem Sicherheitsmodul (HSM) generiert wird und über den ersten sicheren Kanal an das Rechnermittel des Applikationseigners (AO) übertragen wird, wobei der erste sichere Kanal dadurch gebildet wird, dass eine erste Nachricht (M1) mit einer ersten Verschlüsselung, auf welche der Dienstbetreiber keinen Zugriff hat, verschlüsselt wird und anschließend an das Rechnermittel des Applikationseigners (AO) übertragen wird, wobei die erste Nachricht (M1) das kryptographische Geheimnis (key) enthält.

6. Verfahren nach Anspruch 5, bei dem die verschlüsselte erste Nachricht (M1) mit einer Signatur (sig(HSM)) des Sicherheitsmoduls (HSM) signiert ist.

7. Verfahren nach Anspruch 5 oder 6, bei dem die erste Verschlüsselung mit einem öffentlichen Schlüssel (K(AO)) des Applikationseigners (AO) durchgeführt wird oder mit einem privaten Schlüssel, der nur dem Applikationseigner (AO) und dem Sicherheitsmodul (HSM) bekannt ist.

8. Verfahren nach einem der Ansprüche 5 bis 7, bei dem die an das Rechnermittel des Applikationseigners (AO) übertragene verschlüsselte erste Nachricht (M1) entschlüsselt wird und anschließend über den zweiten sicheren Kanal an die Applikation (APPL) übertragen wird, wobei der zweite sichere Kanal dadurch gebildet wird, dass die entschlüsselte erste Nachricht (M1) mit einer zweiten Verschlüsselung verschlüsselt wird, auf welche der Dienstbetreiber keinen Zugriff hat, und anschließend an die Applikation (APPL) gesendet wird.

9. Verfahren nach einem der vorhergehenden Ansprüche, bei dem das kryptographische Geheimnis (key) von dem Generierungsmittel des Applikationseigners (AO) generiert wird und über den ersten sicheren Kanal an das Sicherheitsmodul (HSM) übertragen wird, wobei der erste sichere Kanal dadurch gebildet wird, dass eine zweite Nachricht (M2) über eine zweite Verschlüsselung verschlüsselt wird, auf welche der Dienstbetreiber keinen Zugriff hat, und anschließend an das Sicherheitsmodul (HSM) gesendet wird, wobei die zweite Nachricht (M2) das kryptographische Geheimnis (key) enthält.

10. Verfahren nach Anspruch 9, bei dem die verschlüsselte zweite Nachricht (M2) mit einer Signatur des Applikationseigners (sig(AO)) signiert ist.

11. Verfahren nach Anspruch 9 oder 10, bei dem die zweite Verschlüsselung der zweiten Nachricht (M2) mit einem öffentlichen Schlüssel (K(HSM)) des Sicherheitsmoduls (HSM) durchgeführt wird oder mit einem privaten Schlüssel, der nur dem Applikationseigner (AO) und dem Sicherheitsmodul (HSM) bekannt ist.

12. Verfahren nach einem der vorhergehenden Ansprüche, bei dem der erste sichere Kanal über die Applikation (APPL) getunnelt ist.

13. Verfahren nach Anspruch 12 in Kombination mit einem der Ansprüche 9 bis 11, bei dem der erste sichere Kanal dadurch gebildet wird, dass die verschlüsselte zweite Nachricht (M2) zusammen mit zumindest dem kryptographischen Geheimnis (key) zunächst über den zweiten sicheren Kanal an die Applikation (APPL) übertragen wird, wobei die Applikation (APPL) anschließend die empfangene verschlüsselte zweite Nachricht (M2) an das Sicherheitsmodul überträgt.

14. System zum kryptographischen Schutz einer Applikation (APPL), wobei die Applikation (APPL) einem Applikationseigner (AO) zugeordnet ist und in einem Rechenzentrum ausführbar ist, das von einem externen, nicht zum Applikationseigner (AO) gehörenden Dienstbetreiber verwaltet wird, wobei das System ein im Rechenzentrum vorgesehenes Sicherheitsmodul (HSM) des Applikationseigners (AO) umfasst, auf dem privates kryptographisches Material (MK) des Applikationseigners (AO) hinterlegt ist, sowie ein Generierungsmittel und ein Rechnermittel des Applikationseigners, wobei das System derart ausgestaltet ist, dass es bei der Ausführung der Applikation (APPL) in dem Rechenzentrum folgende Schritte durchführt:
- durch das Generierungsmittel des Applikationseigners (AO) oder durch das Sicherheitsmodul (HSM) wird ein kryptographisches Geheimnis (key) generiert;
- das kryptographische Geheimnis (key) wird über einen ersten sicheren Kanal, der die Kommunikation zwischen der Applikation (APPL) und einem Rechnermittel des Applikationseigners (AO) schützt, zwischen dem Rechnermittel und dem Sicherheitsmodul (HSM) übermittelt, wodurch das kryptographische Geheimnis (key) für das Rechnermittel und das Sicherheitsmodul (HSM) zugänglich wird;
- das kryptographische Geheimnis (key) wird über einen zweiten sicheren Kanal, der die Kommunikation zwischen der Applikation (APPL) und dem Rechnermittel des Applikationseigners (AO) schützt, von dem Rechnermittel an die Applikation (APPL) übermittelt, wodurch das kryptographische Geheimnis (key) für die Applikation (APPL) zugänglich wird;
- eine Authentisierung der Applikation (APPL) gegenüber dem Sicherheitsmodul (HSM) wird basierend auf dem für die Applikation (APPL) und das Sicherheitsmodul (HSM) zugänglichen kryptographischen Geheimnis (key) durchgeführt, wobei nach erfolgreicher Authentisierung das kryptographische Material (MK) des Applikationseigners (AO) über einen durch das kryptographische Geheimnis (key) geschützten Kanal von dem Sicherheitsmodul (HSM) an die Applikation (APPL) übertragbar ist.

15. System nach Anspruch 14, welches derart ausgestaltet ist, mit dem System ein Verfahren nach einem der Ansprüche 2 bis 13 durchführbar ist.

## Claims

1. Method for the cryptographic protection of an application (APPL), wherein the application (APPL) is associated with an application owner (AO) and is executed in a data processing centre which is administered by an external service provider not belonging to the application owner (AO), wherein a security module (HSM) of the application owner (AO) is provided in the data processing centre, on which security module (HSM) private cryptographic material (MK) of the application owner (AO) is stored, wherein:
- a cryptographic secret (key) is generated by a generation means of the application owner (AO) or by the security module (HSM);
- the cryptographic secret (key) is transmitted between a computer means of the application owner (AO) and the security module (HSM) via a first secure channel which protects the communication between the application (APPL) and the computer means, as a result of which the cryptographic secret (key) is made accessible to the computer means and the security module (HSM);
- the cryptographic secret (key) is transmitted from the computer means of the application owner (AO) to the application (APPL) via a second secure channel which protects the communication between the application (APPL) and the computer means, as a result of which the cryptographic secret (key) is made accessible to the application (APPL);
- an authentication of the application (APPL) to the security module (HSM) is carried out based on the cryptographic secret (key) that is accessible to the application (APPL) and the security module (HSM), wherein following successful authentication the cryptographic material (MK) of the application owner (AO) can be transmitted from the security module (HSM) to the application (APPL) via a channel protected by the cryptographic secret (key).

2. Method according to claim 1, wherein the authentication of the application (APPL) is accomplished in such a way that information is encrypted by the application (APPL) using the cryptographic secret (key) that is accessible to the application (APPL) and is transmitted to the security module (HSM), a condition for a successful authentication being that the security module (HSM) can decrypt the information using the cryptographic secret (key) that is accessible to the security module (HSM).

3. Method according to claim 1 or 2, wherein a session identity (SID) is generated which is transmitted in addition at the time of the transmission of the cryptographic secret (key) via the first secure channel and/or via the second secure channel and/or as part of the authentication of the application (APPL), it being verified in the course of the method whether the session identity (SID) remains unchanged.

4. Method according to claim 2 and 3, wherein the session identity (SID) is the information which is encrypted by the application (APPL) during its authentication and transmitted to the security module (HSM).

5. Method according to one of the preceding claims, wherein the cryptographic secret (key) is generated by the security module (HSM) and transmitted to the computer means of the application owner (AO) via the first secure channel, the first secure channel being formed in that a first message (M1) is encrypted by means of a first encryption to which the service provider has no access and is then transmitted to the computer means of the application owner (AO), the first message (M1) containing the cryptographic secret (key).

6. Method according to claim 5, wherein the encrypted first message (M1) is signed with a signature (sig(HSM)) of the security module (HSM).

7. Method according to claim 5 or 6, wherein the first encryption is carried out using a public key (K(AO)) of the application owner (AO) or using a private key which is known only to the application owner (AO) and to the security module (HSM).

8. Method according to one of claims 5 to 7, wherein the encrypted first message (M1) transmitted to the computer means of the application owner (AO) is decrypted and subsequently transmitted to the application (APPL) via the second secure channel, the second secure channel being formed in that the decrypted first message (M1) is encrypted by means of a second encryption to which the service provider has no access and is then sent to the application (APPL).

9. Method according to one of the preceding claims, wherein the cryptographic secret (key) is generated by the generation means of the application owner (AO) and transmitted to the security module (HSM) via the first secure channel, the first secure channel being formed in that a second message (M2) is encrypted by means of a second encryption to which the service provider has no access and is then sent to the security module (HSM), the second message (M2) containing the cryptographic secret (key).

10. Method according to claim 9, wherein the encrypted second message (M2) is signed with a signature of the application owner (sig(AO)).

11. Method according to claim 9 or 10, wherein the second encryption of the second message (M2) is carried out using a public key (K(HSM)) of the security module (HSM) or using a private key which is known only to the application owner (AO) and to the security module (HSM).

12. Method according to one of the preceding claims, wherein the first secure channel is tunnelled by way of the application (APPL).

13. Method according to claim 12 in combination with one of claims 9 to 11, wherein the first secure channel is formed in that the encrypted second message (M2) is transmitted to the application (APPL) initially via the second secure channel together with at least the cryptographic secret (key), the application (APPL) thereupon transmitting the received encrypted second message (M2) to the security module.

14. System for the cryptographic protection of an application (APPL), wherein the application (APPL) is associated with an application owner (AO) and can be executed in a data processing centre which is administered by an external service provider not belonging to the application owner (AO), wherein the system includes a security module (HSM) of the application owner (AO), which security module (HSM) is provided in the data processing centre and on which private cryptographic material (MK) of the application owner (AO) is stored, as well as a generation means and a computer means of the application owner, wherein the system is embodied in such a way that it performs the following steps when the application (APPL) is executed in the data processing centre:
- a cryptographic secret (key) is generated by the generation means of the application owner (AO) or by the security module (HSM);
- the cryptographic secret (key) is transmitted between a computer means of the application owner (AO) and the security module (HSM) via a first secure channel which protects the communication between the application (APPL) and the computer means, as a result of which the cryptographic secret (key) is made accessible to the computer means and the security module (HSM);
- the cryptographic secret (key) is transmitted from the computer means of the application owner (AO) to the application (APPL) via a second secure channel which protects the communication between the application (APPL) and the computer means, as a result of which the cryptographic secret (key) is made accessible to the application (APPL);
- an authentication of the application (APPL) to the security module (HSM) is carried out based on the cryptographic secret (key) which is accessible to the application (APPL) and the security module (HSM), wherein following successful authentication the cryptographic material (MK) of the application owner (AO) can be transmitted from the security module (HSM) to the application (APPL) via a channel protected by the cryptographic secret (key).

15. System according to claim 14, which is embodied in such a way that a method as claimed in one of claims 2 to 13 can be performed by the system.

## Revendications

1. Procédé pour la protection cryptographique d'une application (APPL), l'application (APPL) étant associée à un propriétaire d'application (AO) et étant exécutée dans un centre informatique qui est géré par un opérateur de services externe qui n'appartient pas au propriétaire de l'application (AO), un module de sécurité (HSM) du propriétaire de l'application (AO) sur lequel est déposé du matériel cryptographique privé (MK) du propriétaire de l'application (AO) étant prévu dans le centre informatique,
- un secret cryptographique (key) étant généré par un moyen de génération du propriétaire de l'application (AO) ou par le module de sécurité (HSM) ;
- le secret cryptographique (key) étant transmis entre le moyen informatique et le module de sécurité (HSM) via un premier canal sécurisé qui protège la communication entre l'application (APPL) et un moyen informatique du propriétaire de l'application (AO), le secret cryptographique (key) devenant ainsi accessible pour le moyen informatique et le module de sécurité (HSM) ;
- le secret cryptographique (key) étant transmis du moyen informatique à l'application (APPL) via un deuxième canal sécurisé qui protège la communication entre l'application (APPL) et le moyen informatique du propriétaire de l'application (AO), le secret cryptographique (key) devenant ainsi accessible pour l'application (APPL) ;
- une authentification de l'application (APPL) vis-à-vis du module de sécurité (HSM) étant effectuée sur la base du secret cryptographique (key) accessible à l'application (APPL) et au module de sécurité (HSM), le matériel cryptographique (MK) du propriétaire de l'application (AO) pouvant, après une authentification réussie, être transmis du module de sécurité (HSM) à l'application (APPL) via un canal protégé par le secret cryptographique (key).

2. Procédé selon la revendication 1, selon lequel l'authentification de l'application (APPL) s'effectue de manière telle qu'une information est cryptée par l'application (APPL) avec le secret cryptographique (key) accessible à l'application (APPL) et est transmise au module de sécurité (HSM), une condition d'une authentification réussie consistant en ce que le module de sécurité (HSM) peut décrypter l'information avec le secret cryptographique (key) accessible au module de sécurité (HSM).

3. Procédé selon la revendication 1 ou 2, selon lequel est générée une identité de session (SID) qui est cotransmise lors de la transmission du secret cryptographique (key) via le premier canal sécurisé et/ou via le deuxième canal sécurisé et/ou dans le cadre de l'authentification de l'application (APPL), tout en étant qu'il est vérifié, au cours de la procédure, si l'identité de session (SID) reste inchangée.

4. Procédé selon la revendication 2 et 3, selon lequel l'identité de session (SID) est l'information qui est cryptée par l'application (APPL) lors de l'authentification de celle-ci et est transmise au module de sécurité (HSM).

5. Procédé selon l'une des revendications précédentes, selon lequel le secret cryptographique (key) est généré par le module de sécurité (HSM) et est transmis au moyen informatique du propriétaire de l'application (AO) via le premier canal sécurisé, le premier canal sécurisé étant formé par le fait qu'un premier message (M1) est crypté au moyen d'un premier cryptage auquel l'opérateur de services n'a pas accès, et est ensuite transmis au moyen informatique du propriétaire de l'application (AO), le premier message (M1) contenant le secret cryptographique (key).

6. Procédé selon la revendication 5, selon lequel le premier message crypté (M1) est signé avec une signature (sig(HSM)) du module de sécurité (HSM).

7. Procédé selon la revendication 5 ou 6, selon lequel le premier cryptage est effectué au moyen d'une clé publique (K(AO)) du propriétaire de l'application (AO) ou au moyen d'une clé privée qui est connue uniquement du propriétaire de l'application (AO) et du module de sécurité (HSM).

8. Procédé selon l'une des revendications 5 à 7, selon lequel le premier message crypté (M1) transmis au moyen informatique du propriétaire de l'application (AO) est décrypté et est ensuite transmis à l'application (APPL) via le deuxième canal sécurisé, le deuxième canal sécurisé étant formé par le fait que le premier message décrypté (M1) est crypté au moyen d'un deuxième cryptage auquel l'opérateur de services n'a pas accès, et est ensuite envoyé à l'application (APPL).

9. Procédé selon l'une des revendications précédentes, selon lequel le secret cryptographique (key) est généré par le moyen de génération du propriétaire de l'application (AO) et est transmis au module de sécurité (HSM) via le premier canal sécurisé, le premier canal sécurisé étant formé par le fait qu'un deuxième message (M2) est crypté via un deuxième cryptage auquel l'opérateur de services n'a pas accès, et est ensuite envoyé au module de sécurité (HSM), le deuxième message (M2) contenant le secret cryptographique (key).

10. Procédé selon la revendication 9, selon lequel le deuxième message crypté (M2) est signé avec une signature (sig(AO)) du propriétaire de l'application.

11. Procédé selon la revendication 9 ou 10, selon lequel le deuxième cryptage du deuxième message (M2) est effectué au moyen d'une clé publique (K(HSM)) du module de sécurité (HSM) ou au moyen d'une clé privée qui est connue uniquement du propriétaire de l'application (AO) et du module de sécurité (HSM).

12. Procédé selon l'une des revendications précédentes, selon lequel le premier canal sécurisé est mis sous tunnel par l'intermédiaire de l'application (APPL).

13. Procédé selon la revendication 12 en combinaison avec l'une des revendications 9 à 11, selon lequel le premier canal sécurisé est formé par le fait que le deuxième message crypté (M2) est transmis, au moins avec le secret cryptographique (key), tout d'abord via le deuxième canal sécurisé à l'application (APPL), l'application (APPL) transmettant ensuite au module de sécurité le deuxième message crypté (M2) reçu.

14. Système de protection cryptographique d'une application (APPL), l'application (APPL) étant associée à un propriétaire d'application (AO) et pouvant être exécutée dans un centre informatique qui est géré par un opérateur de services externe qui n'appartient pas au propriétaire de l'application (AO), le système comprenant un module de sécurité (HSM) du propriétaire de l'application (AO) prévu dans le centre informatique et sur lequel est déposé du matériel cryptographique privé (MK) du propriétaire de l'application (AO), ainsi qu'un moyen de génération et un moyen informatique du propriétaire de l'application, le système étant conçu de manière telle qu'il exécute les étapes suivantes lors de l'exécution de l'application (APPL) dans le centre informatique :
- un secret cryptographique (key) est généré par le moyen de génération du propriétaire de l'application (AO) ou par le module de sécurité (HSM) ;
- le secret cryptographique (key) est transmis entre le moyen informatique et le module de sécurité (HSM) via un premier canal sécurisé qui protège la communication entre l'application (APPL) et un moyen informatique du propriétaire de l'application (AO), le secret cryptographique (key) devenant ainsi accessible pour le moyen informatique et le module de sécurité (HSM) ;
- le secret cryptographique (key) est transmis du moyen informatique à l'application (APPL) via un deuxième canal sécurisé qui protège la communication entre l'application (APPL) et le moyen informatique du propriétaire de l'application (AO), le secret cryptographique (key) devenant ainsi accessible pour l'application (APPL) ;
- une authentification de l'application (APPL) vis-à-vis du module de sécurité (HSM) est effectuée sur la base du secret cryptographique (key) accessible à l'application (APPL) et au module de sécurité (HSM), le matériel cryptographique (MK) du propriétaire de l'application (AO) pouvant, après une authentification réussie, être transmis du module de sécurité (HSM) à l'application (APPL) via un canal protégé par le secret cryptographique (key).

15. Système selon la revendication 14, lequel est conçu de manière telle qu'il permet d'exécuter un procédé selon l'une des revendications 2 à 13.
